# EUROPÄISCHE PATENTSCHRIFT

(11) **EP 2 739 504 B1**
(45) Veröffentlichungstag und Bekanntmachung des Hinweises auf die Patenterteilung: **10.10.2018**
(21) Anmeldenummer: 12745816.4
(22) Anmeldetag: 01.08.2012
(51) Int. Cl.: B60N 2/07, B60N 2/06, B60N 2/18, B60N 2/02, B21D 5/01, B21D 19/08, B21D 53/88

(54) **KRAFTFAHRZEUG UND VERFAHREN ZUR HERSTELLUNG EINES SOLCHEN KRAFTFAHRZEUGS**
AUTOMOTIVE VEHICLE AND PROCESS OF MANUFACTURING SUCH AN AUTOMOTIVE VEHICLE
VÉHICULE AUTOMOBILE ET PROCÉDÉ DE FABRICATION D'UN TEL VÉHICULE AUTOMOBILE

(30) Priorität: 01.08.2011 DE 102011080221
(43) Veröffentlichungstag der Anmeldung: 11.06.2014
(73) Patentinhaber: Adient Luxembourg Holding S.à r.l., 1855 Luxembourg (LU)
(72) Erfinder: BECKER, Burkhard, 42657 Solingen (DE); KIENKE, Ingo, 42929 Wermelskirchen (DE); BALIN, Alexander, 48103 Ann Arbor, Michigan (US); SEIBOLD, Kurt, Whitmore Lake, Michigan 48189 (US)
(74) Vertreter: Patentanwälte Bauer Vorberg Kayser
(86) Internationale Anmeldenummer: PCT/EP2012/065064
(87) Internationale Veröffentlichungsnummer: WO 2013/017633

(56) Entgegenhaltungen:
- EP-A1- 0 123 601
- EP-A1- 0 437 257
- EP-A1- 1 645 458
- EP-A2- 1 602 418
- WO-A1-99/51456
- GB-A- 2 071 486
- JP-A- 11 090 534
- JP-A- 2006 305 627
- JP-U- H0 187 042
- US-A- 5 012 613

## Beschreibung

Die Erfindung bezieht sich auf ein Kraftfahrzeug nach dem Oberbegriff des Anspruchs 1 und auf ein Verfahren zur Herstelllung. Ein derartiger Kraftfahrzeugsitz ist aus der GB 2 071 486 A bekannt. Die JP H01 87042 U zeigt einen ähnlichen Kraftfahrzeugsitz. Eine Schienenführung ist aus DE 42 38 486 A1, dort beispielsweise Figur 2, vorbekannt. Weitere Schienenführungen sind bekannt aus US 5,941,495 A und DE 10 2006 048 786 A1. Zudem wird auf DE 10 2006 047 525 A1 verwiesen.

Bei geradlinig verlaufenden Schienen besteht der Nachteil, dass bei einer Verstellung der Sitz im Raum lediglich linear bewegt wird, nicht aber weitere Bewegungen möglich sind. Ein großer Passagier stellt den Sitz weit nach hinten und tief nach unten, in der Regel neigt er auch zudem die Rückenlehne stärker gegenüber der Vertikalen nach hinten als ein kleinerer Passagier, der seinen Sitz weiter nach vorn und höher einstellt. Die Neigung der Rückenlehne kann nach dem Stand der Technik nur durch ein separates Rückenlehnengelenk verstellt werden. Wenn man ein solches vorsieht, bedeutet dies aber einen gewissen Aufwand. Auch die Neigung der Sitzfläche wird unterschiedlich gewählt von großen und kleinen Personen. Um die Neigung der Sitzfläche einstellen zu können, gibt es Sitzneigungsverstellungen. Diese bieten eine gute Bequemlichkeit, bedeuten aber wiederum Aufwand. Häufig wird auch eine Höhenverstellung vorgesehen, mit der die Höhe der Sitzfläche verstellt werden kann. Diese und jede andere zusätzliche Verstelleinrichtung bedeuten grundsätzlich ein Mehrgewicht und einen Aufwand an Material und in der Montage.

Hier setzt nun die Erfindung ein. Sie hat es sich zur Aufgabe gemacht, ein Kraftfahrzeug der eingangs genannten Art so weiterzubilden, dass aufgrund seiner Schienenführung er von sich aus für die gesamte Bandbreite der Passagiere eine möglichst gute Einstellung liefert, so dass zusätzliche Einstellvorrichtungen über die Längsverstellung hinaus soweit wie möglich entfallen können. Dabei soll die Schienenführung nach wie vor einfach aufgebaut sein, sie soll den Ansprüchen, die man an eine Schienenführung nach dem Stand der Technik stellt, standhalten. Sie soll sich für manuelle und motorische Verstellvorrichtungen eignen.

Diese Aufgabe wird gelöst durch die Merkmale des Anspruchs 1.

Die Verstellrichtung verläuft entlang des Verschiebewegs auf einer Kreisbogenlinie. Aufgrund der speziellen Wahl der Krümmungsradien innerhalb der angegebenen Grenzen wird erreicht, dass ein weit hinten in der Schienenführung befindlicher Sitz etwas schräger nach hinten und zudem tiefer positioniert ist als ein im vorderen Bereich der Schienenführung eingestellter Sitz. Dies ermöglicht es, auf zusätzliche Einstellvorrichtungen, beispielsweise eine Sitzhöhenverstellung und/oder eine Neigungsverstellung der Rückenlehne, zu verzichten. Dies bedeutet eine erhebliche Einsparung von Gewicht. Auf diese Weise lässt sich ein Kraftfahrzeugsitz deutlich leichtgewichtiger ausbilden als nach dem Stand der Technik.

Die einer Kreisbogenlinie folgende Krümmung hat einen Krümmungsmittelpunkt, der sich im eingebauten Zustand des Kraftfahrzeugsitzes unterhalb dieses Sitzes befindet. Der Krümmungsmittelpunkt befindet sich auf der Seite der Schienenführung, die von dem Sitzbereich und der Lehne abgewandt ist.

Schienen mit einem derartigen Krümmungsradius lassen sich präzise fertigen. Trotz der nicht mehr linearen Verschiebung werden ein guter Gleichlauf, eine präzise Führung und eine hohe Fertigungsgenauigkeit erreicht. Nach wie vor ist eine der beiden Schienen vorzugsweise die umklammernde Schiene, die andere die umklammerte Schiene. Vorzugsweise liegen die beiden Schienen mit elastischer Vorspannung aneinander an. Die beiden Schienen liegen mittels Roll-oder Gleitkörpern aneinander an. Diese bilden die Führungsmittel. Aufgrund dieser Elastizität werden Fertigungsungenauigkeiten ausgeglichen und die Führungsmittel in ihrer Position gehalten. Die Schienen sind beide jeweils mindestens 25 cm lang, eine der beiden Schienen ist mindestens 30 cm lang. Vorzugsweise werden die Schienen aus einem Stahlblech mit einer Streckgrenze von mindestens 600 N/mm2 gefertigt. Dadurch können Bleche mit einer Dicke z.B. von 1,5 mm verwendet werden. Der Dickenbereich ist 1,2 bis 1,8 mm, vorzugsweise 1,5 + 10% und -30 %. Je dünner das Blech, umso geringer das Gewicht der Schiene.

Vorzugsweise werden beide Schienen als Stanz-Biegeteil jeweils einzeln gefertigt. Dabei wird ausgegangen von einem Zuschnitt aus Stahlblech, insbesondere Breitband. Dieser Zuschnitt ist länglich, er ist entweder bananen- bzw. säbelförmig, wenn die Schiene so montiert werden soll, dass ein Basisflansch in der x-z-Ebene liegt, oder im Wesentlichen rechteckförmig, wenn die Schiene so montiert werden soll, dass ein Basisflansch in der x-y-Ebene liegt. Dieser Zuschnitt wird vorzugsweise in mehreren einzelnen Biegeschritten jeweils um zwei parallelle Biegelinien gebogen. Diese werden durch Biegeleisten realisiert. Es werden Biegungen entlang und in Nähe von den Längskanten durchgeführt. Vorzugsweise ist das Profil der fertigen Schiene klappsymmetrisch oder im Wesentlichen klappsymmetrisch zu einer Achse, die eine Mittelsenkrechte zum Basisflansch ist.

Vorzugsweise wird zur Herstellung einer Schiene, die so montiert werden soll, dass der Basisflansch in der x-y-Ebene liegt, wie folgt verfahren: In einem ersten Bearbeitungsschritt wird der Zuschnitt gebogen, wobei die Biegelinie einen Radius aufweist, der mit dem Krümmungsradius übereinstimmt oder um bis zu 3% abweicht. Der Mittelpunkt befindet sich in Nähe der oder auf der Mittelpunktlinie, diese verläuft parallel zu den kurzen Kanten des Zuschnitts. Der Zuschnitt folgt dann einem Zylindermantel. In einem zweiten Biegeschritt werden dann links und rechts parallel zu der jeweiligen Längskante des Zuschnitts je ein seitlicher erster Schenkel gebogen. Dies erfolgt um eine Biegelinie, die auf einem Kreisbogen liegt. Die Biegelinie weist einen Radius auf, der vom Krümmungsradius um bis zu 3% abweichen kann. Er stimmt in der Regel nicht mit dem Krümmungsradius überein. Sein Mittelpunkt befindet sich in Nähe der oder auf der Mittelpunktlinie. In mindestens einem weiteren Biegeschritt wird mindestens ein weiterer Schenkel gebogen. Hier wird wie beim zweiten Biegeschritt verfahren. Bei der Herstellung einer Schiene, die so montiert werden soll, dass der Basisflansch in der x-z-Ebene liegt, entfällt der erste Bearbeitungsschritt und wird gleich mit dem zweiten Biegeschritt begonnen.

Aufgrund der Verwendung von hochfestem Stahlmaterial und durch die Biegeschritte bedingt tritt ein Verzug bzw. eine Verwerfung auf. Die Schenkel und ggf. auch der Basisflansch der späteren Schiene zeigen Unregelmäßigkeiten, sie verlaufen nicht exakt auf einer Zylindermantelfläche bzw. einer glatten, regelmäßig gekrümmten Fläche. Umso hochfester der Stahl ist, also umso größer die Streckgrenze ist, umso größer sind auch die inneren Spannungen im Material bei den Biegeschritten und damit die Verwerfungen. Deshalb muss nach mindestens einem Biegeschritt, vorzugsweise nach zwei oder drei Biegeschritten ein Ausgleich der Verwerfungen und Spannungen erfolgen. Dies erfolgt in einem Kalibrierschritt. Dabei wird die Schiene begradigt. Der Verzug wird beseitigt. Dies geschieht dadurch, dass zur Gegenseite, also in Gegenrichtung der vorherigen Biegerichtung, überbogen wird. Dabei wird eine plastische Deformation durchgeführt. Die seitliche Flanke wird auf diese Weise begradigt. Gegebenenfalls wird auch ein anderer Bereich begradigt.

Die Verbiegungen erfolgen dadurch, dass Biegeleisten an den Zuschnitt angelegt werden und um die Biegeleisten gebogen wird. Die Biegeleisten haben eine Krümmung um den Krümmungsmittel mit einer Abweichung im Radius von unter +/- 3% vom Krümmungsradius. Es werden Biegeschritte durchgeführt, wie dies auch bei gradlinig verlaufenden Schienen durchgeführt wird. Es werden nun aber Biegeleisten verwendet, die nicht gradlinig verlaufen, sondern um den Biegeradius gekrümmt.

Vorzugsweise ist der Schienenführung ein Stellantrieb für die Längsverstellung zugeordnet. Dieser Stellantrieb hat vorzugsweise einen Drehantrieb, der eine Ausgangswelle und ein Getriebe hat, das eine Spindelmutter, die mit der Ausgangswelle drehverbunden ist und eine Spindel aufweist, dabei weist die Spindel ein Spindelgewinde auf, mit dem die Spindelmutter in Eingriff ist, die Spindel ist in demselben kreisförmigen Krümmungsradius wie die Schienen gekrümmt, die Spindelmutter ist eine gerade Mutter.

Vorzugsweise ist der Kraftfahrzeugsitz mit einer motorischen Verstellvorrichtung ausgerüstet, die für die Verstellung entlang des Verschiebeweges sorgt. Der Drehantrieb kann auch für eine manuelle Verstellung ausgelegt sein. Der Drehantrieb ist dann von Hand zu betätigen. Er weist z.B. eine Kurbel auf, die sich in Griffweite eines Passagiers befindet und über die der Passagier die Drehbewegung in das Getriebe einleitet. Im Gegensatz zu einer Schienenführung nach dem Stand der Technik, die ohne Drehantrieb und mit einer manuell zu betätigenden Arretiereinrichtung ausgestattet ist, wird keine Feder benötigt, die den Sitz innerhalb seiner Schienenführung nach vorn belastet. Diese Feder muss eine erhebliche Federkraft aufweisen, sie trägt zum Gesamtgewicht bei. Eine derartige Feder wird eingespart.

Es ist auch Aufgabe der Erfindung, ein Verfahren zum Herstellen einer derartigen Schienenführung anzugeben. Gemäß diesem Verfahren werden die Bodenschiene und die Sitzschiene jeweils aus einem geeigneten Zuschnitt hergestellt, dieser Zuschnitt verläuft entlang der Krümmungsradien, den die fertige Schiene hat. Die Zuschnitte werden in mindestens einer jeweiligen Prägeform geprägt, das Prägen findet in zumindest einem Prägeschritt statt. Auf diese Weise wird die fertige Schiene erstellt.

Dieses Verfahren hat den Vorteil, dass die gewünschten Genauigkeiten erreicht werden. Es lassen sich auf diese Weise Schienen herstellen, die trotz des gekrümmten Verlaufs des Verschiebeweges leicht verstellbar sind, präzise ineinander geführt sind und gute Gleiteigenschaften aufweisen.

Üblicherweise hat eine Längsverstellung zwei Schienenführungen, die weitgehend baugleich sind. Bei einem Kraftfahrzeugsitz mit zwei Schienenführungen sind beide Schienenführungen um denselben Krümmungsradius gebogen.

Die Bodenschiene weist vorzugsweise Befestigungsbereiche auf, an diesen ist sie mit einer Bodengruppe des Kraftfahrzeugs verbindbar.

Bei dem Kraftfahrzeugsitz weist das Sitzgestell Verbindungsteile auf, die Verbindungsteile sind vorzugsweise mit den Mitteln zur Befestigung der beiden Sitzschienen jeder Seite verbunden.

Vorzugsweise hat ein derartiger Kraftfahrzeugsitz keine weitere Einstellvorrichtung, insbesondere keine Sitzhöhenverstellung und/oder keine Lehnenneigungsverstellung.

Im Kraftfahrzeug ist die Schienenführung so angeordnet, dass in der hintersten Position der Längsverstellung die Lehne des Kraftfahrzeugsitzes in einem Winkel von 10 bis 15° gemessen von der Vertikalen nach hinten geneigt ist und in der vordersten Position in einem Winkel von 5 bis 10°, wiederum gemessen von der Vertikalen nach hinten geneigt ist, wobei die Winkeländerung zwischen diesen beiden Positionen mindestens 4°, vorzugsweise 6° beträgt. Dabei werden die gewünschten Verstellpositionen unmittelbar über die Schienenführung erreicht, ohne dass zusätzliche Einstellvorrichtungen vorhanden sind. Dies führt zu einem deutlichen Kosten- und Gewichtsvorteil.

Bei dem Kraftfahrzeugsitz ist der Sitzbereich vorzugsweise starr mit den Schienen verbunden. Es sind vorzugsweise keine Einstellvorrichtungen zwischen der Sitzschiene und dem Sitzbereich vorgesehen. Dadurch werden Bauteile einer normalerweise vorhandenen Sitzhöhenverstellung und/oder Sitzneigungsverstellung eingespart. Zu diesen Bauteilen gehört beispielsweise eine sitzanhebende Feder, die eine gewisse Federkraft haben muss, was ein beträchtliches Gewicht bedeutet, es werden Gelenkarme und Einstellvorrichtungen, beispielsweise Taumelgelenkbeschläge, eingespart.

Vorzugsweise liegen alle Krümmungsmittelpunkte von Teilbereichen der Schienen und ggf. einer zugeordneten, gekrümmten Spindel auf einer Mittelpunktlinie, die eine Parallele zur y-Achse ist. Die einzelnen Radien verlaufen senkrecht zu dieser Mittelpunktlinie. Ihre Mittelpunkte liegen auf der Mittelpunktslinie. Bei einer Längsführung mit zwei Schienenführungen liegen die Krümmungsmittelpunkte beider Schienenführungen auf derselben Mittelpunktlinie, allerdings an unterschiedlichen Orten auf dieser. Bei jeder einzelnen Schiene einer Schienenführung liegen die Zentren der Krümmungsradien der Kanten auf der Mittelpunktlinie. Sie haben dort denselben Abstand voneinander, wie sie in der Schiene selbst in y-Richtung beabstandet sind. Die Krümmungsradien unterschiedlicher Teilbereiche der Schienen sind unterschiedlich. Sie verlaufen konzentrisch zueinander. Dies gilt insbesondere für die Teilbereiche einer Schiene, die in Kontakt mit der anderen Schiene sind.

Weitere Vorteile und Merkmale der Erfindung ergeben sich aus den übrigen Ansprüchen sowie der folgenden Beschreibung eines nicht einschränkend zu verstehenden Ausführungsbeispiels der Erfindung, das unter Bezugnahme auf die Zeichnung im Folgenden näher erläutert wird. In dieser Zeichnung zeigen:
- Fig. 1:: eine prinzipielle Seitenansicht auf einen Kraftfahrzeugsitz mit einer gekrümmten Schienenführung,
- Fig. 2:: eine perspektivische Darstellung in Form eines Montagebildes einer Schienenführung mit zusätzlichem Spindelantrieb,
- Fig. 3:: einen Axialschnitt durch eine Spindel eines Spindelantriebs mit Spindelmutter, Gehäuse und Zubehör, gezeigt ist nur der Bereich um die Spindelmutter herum,
- Fig. 4:: eine Draufsicht auf einen Zuschnitt für eine Schiene,
- Fig. 5:: eine prinzipielle Darstellung einer Prägeform mit Draufsicht auf den Formhohlraum,
- Fig. 6:: eine perspektivische Ansicht eines Zuschnitts für eine Außenschiene,
- Fig. 7: den Zuschnitt nach Fig. 6 nach einer ersten Biegestufe,
- Fig. 8: den Zuschnitt nach Fig. 6 nach einer zweiten Biegestufe,
- Fig. 9:: eine perspektivische Ansicht eines Zuschnitts für eine Innenschiene,
- Fig. 10: den Zuschnitt nach Fig. 9 nach einer ersten Biegestufe,
- Fig. 11: den Zuschnitt nach Fig. 9 nach einer zweiten Biegestufe,
- Fig. 12: den Zuschnitt nach Fig. 9 nach einer dritten Biegestufe,
- Fig. 13: den Zuschnitt nach Fig. 9 nach einer vierten Biegestufe und
- Fig. 14: eine schematische, perspektivische Darstellung einer Biegeform, wie sie für die Herstellung der Schienen nach Fig. 1 und 3 alternaitiv zu der Prägeform gem. Fig. 5 verwendet werden kann.

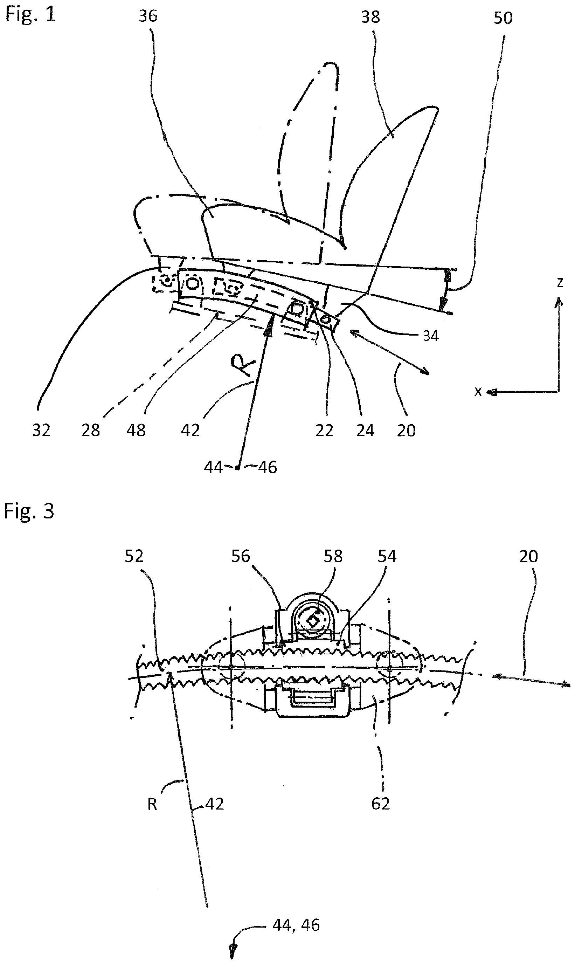

Der in Figur 1 dargestellte Kraftfahrzeugsitz ist in zwei unterschiedlichen Extrempositionen dargestellt, nämlich in ausgezogenen Strichen in einer hintersten Position und strichpunktiert in einer vordersten Position. Beide Positionen werden entlang eines Verschiebeweges 20 erreicht, der auf einem Kreisbogen verläuft.

In bekannter Weise hat der Kraftfahrzeugsitz mindestens ein Schienenpaar, das eine Bodenschiene 22, eine Sitzschiene 24 und Führungsmittel 26 aufweist. Im gezeigten Ausführungsbeispiel sind zwei parallel zueinander angeordnete Schienenführungen vorgesehen. Sie sind im Ausführungsbeispiel baugleich. Die Führungsmittel 26 sind als Kugeln ausgebildet, andere Ausbildungen sind möglich. Die Bodenschiene 22 ist im Wesentlichen C-förmig. Sie ist als umgreifende Schiene ausgebildet. Sie hat Mittel für eine Befestigung an einer Bodengruppe 28 eines sonst nicht näher dargestellten Kraftfahrzeugs. Die Sitzschiene 24 ist eine umgriffene Schiene, auch sie ist im Wesentlichen C-förmig. Sie hat Mittel 30, die hier als Öffnungen ausgebildet sind, sie dienen der Verbindung mit einem vorderen Verbindungsteil 32 und einem hinteren Verbindungsteil 34 für jede Sitzseite. Diese Verbindungsteile 32, 34 tragen einen Sitzbereich 36. Dieser ist starr mit der Sitzschiene 24 verbunden. Es ist eine Lehne 38 vorgesehen. Wie Figur 1 zeigt, sind keine Mittel für eine Sitzneigungsverstellung, Sitzhöhenverstellung und Neigungsverstellung der Lehne 38 vorgesehen.

Für die Beschreibung wird ein rechtshändiges x-y-z-Koordinatensystem verwendet. Die x-Achse und die y-Achse liegen in der Horizontalen. Die x-Achse zeigt in die Richtung normaler Geradeausfahrt des Kraftfahrzeugs. Die z-Achse ist parallel zu einer Vertikalen.

Die beiden Schienen 22, 24 jeder Schienenführung begrenzen einen kanalförmigen Hohlraum 40. Er ist nur in x-Richtung offen.

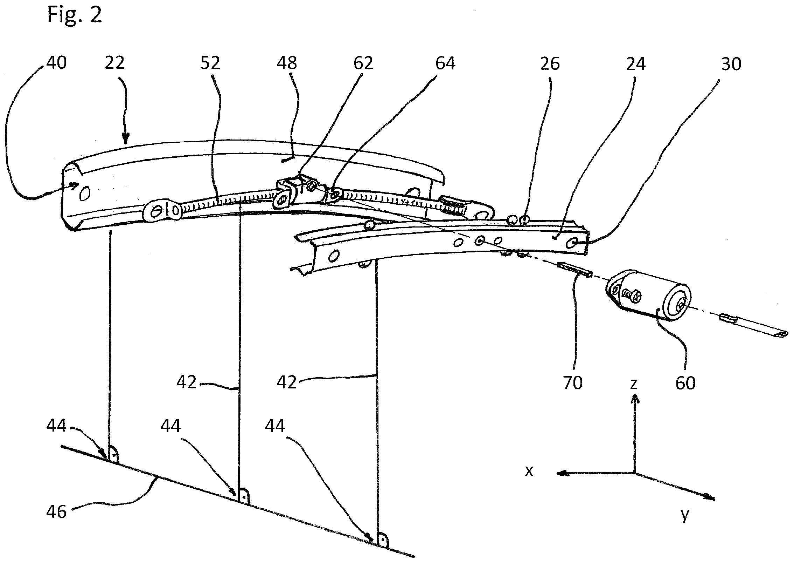

Die Bodenschiene 22 und die Sitzschiene 24 sind um den jeweils gleichen, kreisförmigen Krümmungsradius gekrümmt. Der Verschiebeweg 20 hat mindestens eine Länge von 150 mm und maximal eine Länge von 350 mm. Vorzugsweise liegt der Verschiebeweg 20 im Bereich von 250 bis 300 mm. De Krümmungsradius R 42 liegt zwischen 1.500 und 3.000 mm, insbesondere zwischen 1.800 und 2.500 mm. Ein Krümmungsmittelpunkt 44 liegt auf einer Mittelpunktlinie 46, die eine Parallele zur y-Achse ist. Die Krümmungsradien 42 für die einzelnen Kanten einer Schiene 22 bzw. 24 haben unterschiedliche Längen und auch unterschiedliche Krümmungsmittelpunkte. Alle Krümmungsmittelpunkte liegen auf einer Mittelpunktlinie 46. Die Radien verlaufen jeweils senkrecht zur Mittelpunktlinie 46, dies ist in Fig. 2 durch ein entsprechendes Symbol angegeben. Die Krümmungsmittelpunkte 44 zweier unterschiedlicher Längskanten einer Schiene 22 bzw. 24 haben in der Schiene selbst denselben Abstand in y-Richtung wie auf der Mittelpunktlinie 46. Jede Schiene 22 bzw. 24 hat über ihre Länge gesehen einen konstanten Querschnitt. Der Querschnitt wird auf einer Querschnittsebene ermittelt, die Mittelpunktlinie 46 liegt in der jeweiligen Querschnittsebene. Die einzelnen Querschnittsebenen stehen in einem Winkel zueinander.

Beide Schienen 22, 24 haben jeweils einen Basisflansch 48. Dieser Basisflansch verläuft in einer Ebene, die parallel zur x-z-Ebene ist. Der Basisflansch 48 hat die Form eines Kreisscheibensektors.

Die beiden Schienenpaare des Kraftfahrzeugsitzes sind lediglich in y-Richtung zueinander versetzt, in x-Richtung und in z-Richtung haben sie übereinstimmende Koordinaten. Der Versatz in y-Richtung entspricht mindestens der halben Breite des Sitzbereichs und ist maximal 120% der Breite in y-Richtung des Sitzbereichs.

Figur 1 zeigt den Zustand des im Kraftfahrzeug (nicht dargestellt) eingebauten Kraftfahrzeugsitzes. In diesem Einbauzustand ist das hintere Ende der Schienen 20, 22 der tiefste Punkt. Die Bezeichnung vorn entspricht der positiven Richtung der x-Richtung und oben entspricht der positiven Richtung der z-Achse.

Die Schienenführung ist im Kraftfahrzeug nach vorn ansteigend angeordnet. Eine Tangente angelegt an den vordersten Bereich der Bodenschiene 22 verläuft im Wesentlichen parallel zur x-y-Ebene. Die Tangente weicht von dieser Ebene vorzugsweise nur ±° 5, insbesondere nur ±° 3 ab.

In einer vordersten Stellung ist der Sitzbereich 36 um einen Winkel gegenüber der horizontalen x-y-Ebene nach hinten geneigt, der bei etwa 3° liegt. Der Winkelbereich kann 0 bis 6° betragen. Innerhalb des Verschiebeweges 20 wird eine Winkeländerung 50 um etwa 10° erreicht. Diese Winkeländerung kann zwischen 4 und 12° liegen.

Im Ausführungsbeispiel ist die Länge der vorderen Verbindungsteile 32 etwas geringer, beispielsweise 5 bis 30% geringer, als die Länge der hinteren Verbindungsteile 34. Die vorderen Verbindungsteile 32 jeder Sitzseite und ebenfalls die hinteren Verbindungsteile 34 jeder Sitzseite sind in Längsrichtung, die im Wesentlichen mit der z-Richtung übereinstimmt, gleich lang.

Die Mittelpunktlinie 46 ist der Ort der Krümmungsmittelpunkte 44. Diese befinden sich unterhalb der Schienenführung und damit auf der anderen Seite der Schienenführung als der Sitzbereich 36 und die Lehne 38.

Es ist eine motorische Verstellvorrichtung vorgesehen, die eine Verstellung des Kraftfahrzeugsitzes innerhalb des Verschiebeweges 20 ermöglicht. Sie hat in an sich bekannter Weise eine Spindel 52, die drehfest an ihren Enden über Halter mit der Bodenschiene 22 verbunden ist. Im Unterschied zum Stand der Technik ist die Spindel 52 entlang einer Kreislinie gekrümmt. Diese Kreislinie hat einen Krümmungsradius, der den Krümmungsradius der Schienen 22, 24 entspricht. Der Krümmungsmittelpunkt liegt auf der Mittelpunktlinie 46. Verwendet werden Spindeln mit einem Durchmesser von 6 bis 10 mm, beispielsweise eine Spindel mit M8-Gewinde. In an sich bekannter Weise wird die Spindel 52 von einer Spindelmutter 54 umgriffen. Diese Spindelmutter 54 ist gerade. Sie hat eine Länge von 10 bis 20 mm. Vorzugsweise wird sie kurz gewählt. Eine Länge von 10 bis 15 mm ist bevorzugt. Die Spindelmutter 54 ist eine Mutter nach dem Stand der Technik. Vorzugsweise hat die Spindelmutter 54 jedoch an jeder axialen Seite einen Anfangsbereich 56, der kegelförmig oder anderweitig nach außen erweiternd ausgebildet ist. Aufgrund der Anfangsbereiche 56 wird einem Verkanten der Spindelmutter 54 entgegengewirkt.

In an sich bekannter Weise ist an der Spindelmutter ein äußeres Schneckenrad ausgebildet, das in Eingriff mit einer Schnecke 58 ist. Diese ist über eine elastische Ausgangswelle 70 mit einem Elektromotor 60 verbunden. Der Elektromotor 60 ist für beide Sitzseiten zuständig, er ist über eine weitere elastische Welle mit der Schienenführung der anderen Sitzseite verbunden. Dies ist Stand der Technik.

In einer bevorzugten Alternative wird anstelle eines Elektromotors ein Handantrieb eingesetzt, hier findet beispielsweise eine Handkurbel Verwendung. Diese kann unterhalb der Sitzvorderkante angeordnet sein und eine im Wesentlichen in x-Richtung verlaufende Drehachse haben. Sie ist über elastische Wellen mit den beiden Sitzseiten verbunden.

Die Spindelmutter 54 und die Schnecke 58 sind in einem Gehäuse 62 untergebracht. Das Gehäuse 62 wird von einer Klammer 64 umgriffen, die im Wesentlichen U-förmig ist. Sie hat Befestigungsbereiche, diese sind mit der Sitzschiene 24 verbunden, hierzu hat die Sitzschiene 24 Befestigungslöcher. In der Mitte zwischen den beiden Befestigungslöchern befindet sich ein Durchlass der Sitzschiene 24 für die elastische Ausgangswelle 70.

Im Folgenden wird nun ein erstes Verfahren zur Herstellung der Sitzschiene 22, 24 beschrieben, wie sie für das Ausführungsbeispiel nach Fig. 1 und 3 geeignet ist, also für eine Befestigung an einem Bauteil, das im Wesentlichen in der x-y-Ebene verläuft.

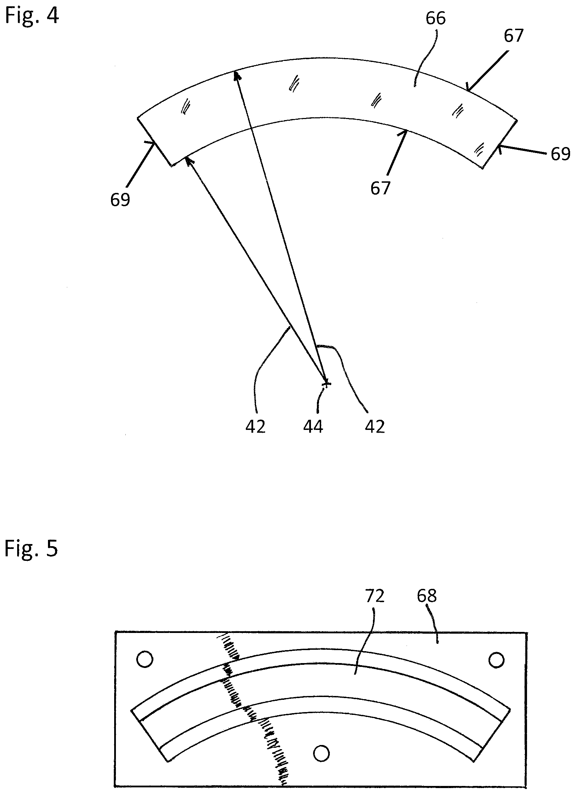

Figur 4 zeigt einen bananen- bzw. säbelförmigen Zuschnitt 66. Er ist aus einem Blechmaterial zugeschnitten. Verwendet werden Stahlblechqualitäten und - dicken wie im Stand der Technik. Im Unterschied zum Stand der Technik ist der Zuschnitt 66 durch Kreisbogenlinien begrenzt, die einem Krümmungsradius entsprechend der fertigen Schiene aufweisen. Seitlich sind die Zuschnitte durch Längskanten 67 in Form von radialen Linien begrenzt. Wie Figur 4 zeigt, liegen die Krümmungsmittelpunkte 44 im Wesentlichen auf einer in der Papierebene verlaufenden Linie, die der späteren Mittelpunktlinie 46 entspricht. Die Krümmungsmittelpunkte 44 verteilen sich über eine Länge, die der Dicke des Zuschnitts 66 entspricht. Der Radius weicht vom Krümmungsradius um weniger als 3% ab. Der Zuschnitt hat kurze Querkanten 69.

In Figur 5 ist ein Teil einer Prägeform 68 dargestellt, gezeigt ist nur eine prinzipielle Ansicht. Die Prägeform 68 ist eine entsprechende Gegenform zugeordnet, diese ist nicht dargestellt. Das Prägen des Zuschnitts 66 kann in einer einzigen Prägeform 68 mit Matrize und Patrize erfolgen, es können aber auch mehrere Prägeschritte in unterschiedlichen Prägeformen 68 durchgeführt werden. Der Zuschnitt 66 wird in die Prägeform 68 eingelegt, es wird dann die Gegenform hinzugefügt und der Prägevorgang durchgeführt.

Eine Herstellung der Schiene 22, 24 durch schrittweises Formen entlang des Krümmungsverlaufs ist möglich, ein derartiges Verfahren wäre beispielsweise ein Rollen oder Biegen.

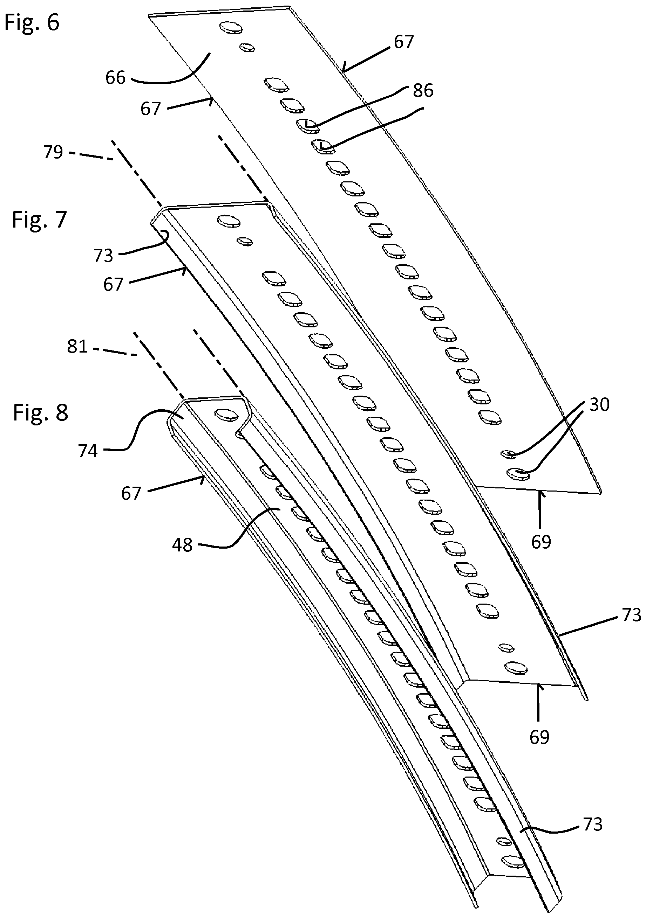

Ein weiteres Verfahren wird nun unter Bezugnahme auf die Figuren 6-8 und 9-13 beschrieben. Figur 6 zeigt eine perspektivische Ansicht eines Zuschnitts 66, aus dem eine Außenschiene hergestellt werden soll. Sie ist für eine Befestigung an einem Bauteil, das im Wesentlichen in der x-y-Ebene verläuft, bestimmt. Der Zuschnitt 66 ist bereits so gebogen, das er einem Zylindermantel folgt, dessen Achse durch die Mittelpunktslinie 46 (mit einer maximalen Abweichung von 3% der Radiuslänge) bestimmt ist. Anders ausgedrückt verlaufen die Längskanten 67 nun entlang eines Kreisbogens mit einem Radius, der vom Krümmungsradius 42 um maximal 3% abweicht. Die Querkante 69 verläuft parallel zur Mittelpunktslinie 46.

In Figur 7 ist eine erste Biegestufe durchgeführt. Dabei sind erste Schenkel 73 parallel zu den beiden Längskanten 67 und in deren Nähe abgewinkelt worden. Eine erste Biegelinie 79 verläuft entlang eines Kreisbogens mit einem Radius, der vom Krümmungsradius 42 um maximal 3% abweicht.

Figur 8 zeigt den Zustand nach einem zweiten Biegeschritt entlang zweiten Biegelinien 81, diese liegen innerhalb der ersten Biegelinien 79 des ersten Biegeschrittes, es werden zweite Schenkel 74 abgewinkelt. Durch die Biegeschritte hat sich das verwendete hochfeste Material verworfen, es hat sich leicht verworfen und verdrillt. Die Unregelmäßigkeiten werden durch einen Kalibrierschritt beseitigt. Der Kalibrierschritt wird auch als Ausgleichsschritt oder Korrekturbiegeschritt bezeichnet. Hierbei werden der erste Schenkel 73 und/oder der zweite Schenkel 74 jeweils so in Gegenrichtung zum vorangegangenen jeweiligen Biegeschritt überbogen und plastisch deformiert, dass die Verwerfungen abgebaut werden und die Außenfläche des jeweiligen Schenkels 73, 74 einen regelmäßigen, glatten Verlauf hat.

Entsprechend wie die Außenschiene wird die Innenschiene erstellt, dies wird im Folgenden beschrieben, es werden allerdings mehr als zwei Biegeschritte durchgeführt. Mit 92 wird allgemein eine Biegelinie bezeichnet.

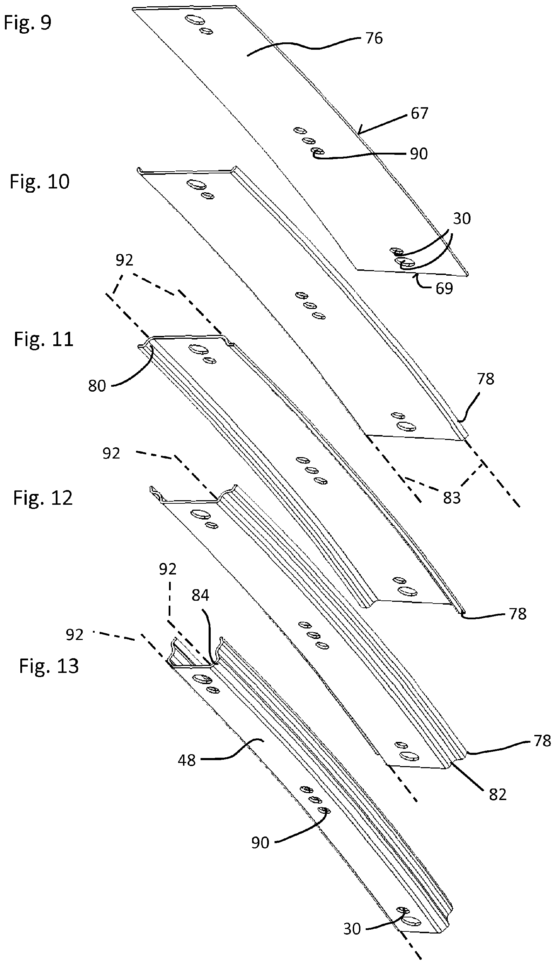

Figur 9 zeigt den rechteckförmigen Zuschnitt 76 der Innenschiene, er ist bereits ebenso wie der Zuschnitt 66 für die Außenschiene gekrümmt.

Figur 10 zeigt den Zuschnitt 76 nach Durchführen eines ersten Biegeschritts, dabei sind erste Außenschenkel 78 ausgebildet. Gebogen wurde entlang einer dritten Biegelinie 83, sie verläuft entlang eines Kreisbogens mit einem Radius, der vom Krümmungsradius 42 um maximal 3% abweicht. Nach einem zweiten Biegeschritt, den Figur 11 zeigt, sind zweite Außenschenkel 80 gebildet, die innseitig der ersten Außenschenkel 78 liegen. Nach einem dritten Biegeschritt, den Figur 12 zeigt, sind dritte Außenschenkel 82 aus der Ebene des Zuschnitts 76 ausgebogen, sie liegen innseitig der zweiten Außenschenkel 80.

In einem vierten und letzten Biegeschritt, den Figur 13 zeigt, sind vierte Außenschenkel 84 erstellt, sie liegen innseitig der dritten Außenschenkel 82. Jeder Biegeschritt, der für die Außenschiene und die Innenschiene beschrieben wurde, erfolgt jeweils um eine Kreisbogenlinie mit einem Radius, der vom Krümmungsradius 42 um maximal 3% abweicht.

Der Zuschnitt 71 für die Außenschiene hat eine Vielzahl von Rastöffnungen 86, die in Längsrichtung hintereinander periodisch angeordnet sind. Jeder Zuschnitt 71, 76 hat Befestigungsmittel 30, die hier als Löcher ausgebildet sind. Mit ihrer Hilfe kann die Schiene direkt an einem im Wesentlichen in der x-y-Ebene verlaufenden Bauteil der Bodengruppe angeschraubt werden. Die dabei verwendeten Schrauben verlaufen in der z-Richtung. Der Zuschnitt 76 für die Innenschiene hat Stiftlöcher 90, hier werden einzelne Sperrstifte einer Vielstiftverriegelung hindurchgeführt, wie sie beispielsweise aus dem EP 1 316 465 B1 bekannt ist.

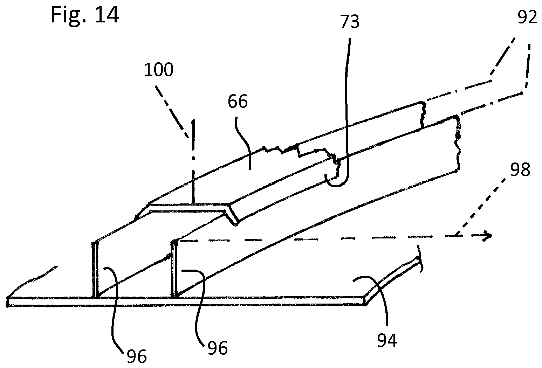

Figur 14 zeigt schematisch eine Biegevorrichtung, wie sie alternativ zur Prägeform 68 gemäß Figur 5 eingesetzt werden kann, um einen Zuschnitt 66 entsprechend Figur 4, der bananen- bzw. säbelförmig gekrümmt ist, schrittweise in eine Schiene zu verformen. Die Biegevorrichtung hat eine Basis 94, von der zwei parallele Biegeleisten 96 nach oben wegstehen. Sie bilden mit ihren oberen, glatten Kanten eine Biegelinie 92 aus. Diese verläuft auf einem Kreisbogen mit dem Radius 98, dieser Radius 98 unterscheidet sich um maximal 3% vom Krümmungsradius 42. Sein Zentrum liegt oberhalb der Basis 94, der Radius 98 verläuft parallel zur Ebene der Basis 94. Die Biegeleisten 96 bilden Biegelinien 92 aus. Auf die Oberkanten der Biegeleisten 96 ist bereits ein Zuschnitt 66 aufgelegt, es ist ein erster Biegevorgang entlang der Biegelinien 92 durchgeführt worden, es ist ein erster Schenkel 73 beidseitig erstellt worden. Die Biegelinie 92 verläuft in Nähe der Längskante 67. Der erreichte Zwischenzustand ist wie auch die finale Schiene klappsymmetrisch zu einer Achse 100, die eine Mittelsenkrechte zum Basisflansch 48 der späteren Schiene ist.

Eine Biegeform für die Herstellung der Schienen gemäß den Figuren 6-13 unterscheidet sich von der Biegeform gemäß Figur 14 wie folgt: Die Biegeleisten verlaufen nun gradlinig. Sie bleiben parallel zueinander. Der Abstand der Biegelinie von der Basis 94 ist nicht mehr konstant, wie bei Figur 14, sondern ändert sich, er liegt nach wie vor auf einem Kreisbogen. Der Radius 98 läuft nun rechtwinklig zur Basis 94, in der Ebene der Biegeleiste.

### Bezugszeichenliste

- 20: Verschiebeweg
- 22: Bodenschiene
- 24: Sitzschiene
- 26: Führungsmittel
- 28: Bodengruppe
- 30: Mitte (Loch 88 Befestigungsmittel)
- 32: vorderes Verbindungsteil
- 34: hinteres Verbindungsteile
- 36: Sitzbereich
- 38: Lehne
- 40: Hohlraum
- 42: Krümmungsradius
- 44: Krümmungsmittelpunkt
- 46: Mittelpunktlinie
- 48: Basisflansch
- 50: Winkeländerung
- 52: Spindel
- 54: Spindelmutter
- 56: Anfangsbereich
- 58: Schnecke
- 60: Elektromotor
- 62: Gehäuse
- 64: Klammer
- 66: Zuschnitt
- 67: Längskante
- 68: Prägeform
- 69: Querkante
- 70: Ausgangswelle
- 71: Zuschnitt für Außenschiene
- 72: Hohlraum
- 73: erster Innenschenkel
- 74: zweiter Innenschenkel
- 76: Zuschnitt für Innenschiene
- 78: erster Außenschenkel
- 80: zweiter Außenschenkel
- 82: dritter Außenschenkel
- 84: vierter Außenschenkel
- 86: Rastöffnung
- 90: Stiftlöcher
- 94: Basis
- 96: Biegeleiste
- 98: Radius
- 100: Achse

## Patentansprüche

1. Kraftfahrzeug, mit einem an einer Bodengruppe (28) befestigten Kraftfahrzeugsitz,
- mit einem Sitzgestell, das einen Sitzbereich (36) aufweist, und
- mit einer Längsverstellvorrichtung, die eine Schienenführung mit mindestens einem Schienenpaar hat, das eine an der Bodengruppe befestigte Bodenschiene (22), eine Sitzschiene (24) und zwischen diesen beiden Schienen angeordnete Führungsmittel (26) aufweist, wobei die Schienen des Schienenpaars in einer Längsrichtung, die im Wesentlichen parallel zu einer x-Achse ist, gegeneinander entlang eines Verschiebewegs (20) verschiebbar sind und die Sitzschiene (24) Mittel (30) zur Befestigung des oberhalb des Schienenpaars anzuordnenden Sitzgestells aufweist, wobei die Bodenschiene (22) und die Sitzschiene (24) um den jeweils gleichen, kreisförmigen Krümmungsradius (42) gekrümmt sind und der Krümmungsmittelpunkt (44) sich auf der dem Sitzgestell abgewandten Seite des Schienenpaars befindet,
**dadurch gekennzeichnet, dass** der Krümmungsradius (42) zwischen 1.500 und 3.000 mm, insbesondere zwischen 1.800 und 2.500 mm liegt, und dass eine Tangente angelegt an den vordersten Bereich der Bodenschiene (22) im Wesentlichen parallel zur x-y-Ebene verläuft und von dieser Ebene vorzugsweise nur ± 5°, insbesondere nur ± 3° abweicht.

2. Kraftfahrzeug nach dem vorangegangenen Anspruch, **dadurch gekennzeichnet, dass** der Krümmungsmittelpunkt (44) sich auf einer Ebene befindet, die parallel zur x-z-Ebene ist und durch die Mitte des Schienenpaars verläuft.

3. Kraftfahrzeug nach einem der vorangegangenen Ansprüche, **dadurch gekennzeichnet, dass** in einer vordersten Stellung der Sitzbereich (36) um einen Winkel gegenüber der horizontalen x-y-Ebene nach hinten geneigt ist, der im Bereich von 0 bis 6° liegt.

4. Kraftfahrzeug nach einem der vorangegangenen Ansprüche, **dadurch gekennzeichnet, dass** die Mittel (30) zur Befestigung des Sitzgestells vordere Verbindungsteile (32) und hintere Verbindungsteile (34) aufweisen, und dass die vorderen Verbindungsteile (32) eine 5 bis 30% geringere Länge als die Länge der hinteren Verbindungsteile 34 aufweisen, und/oder dass die vorderen Verbindungsteile (32) jeder Sitzseite und die hinteren Verbindungsteile (34) jeder Sitzseite in Längsrichtung, die im Wesentlichen mit der z-Richtung übereinstimmt, gleich lang sind.

5. Kraftfahrzeug nach einem der vorangegangenen Ansprüche, **dadurch gekennzeichnet, dass** die Längsverstellvorrichtung weiterhin einen Stellantrieb aufweist, dass der Stellantrieb a) einen Drehantrieb, insbesondere einen Elektromotor, der eine Ausgangswelle hat, b) ein Getriebe, das eine Spindelmutter hat, die mit der Ausgangswelle drehverbunden ist und c) eine Spindel aufweist, dass die Spindel ein Spindelgewinde aufweist, mit dem die Spindelmutter in Eingriff ist, dass die Spindel in demselben kreisförmigen Krümmungsradius (42) wie die Schienen gekrümmt ist, und dass die Spindelmutter eine gerade Mutter ist.

6. Kraftfahrzeug nach einem der Ansprüche 1 bis 5, **dadurch gekennzeichnet, dass** der Kraftfahrzeugsitz keine Sitzneigungsverstellung und Sitzhöhenverstellung hat und keine Neigungsverstellung einer Lehne (38) hat, und dass auf ein in einer horizontalen Ebene befindliches Fahrzeug bezogen, die Lehne in der hintersten Position der Längsverstellung in einem Winkel von 10 bis 15° gemessen von der Vertikalen nach hinten geneigt ist und in der vordersten Position der Sitzverstellung in einem Winkel von 5 bis 10° gemessen von der Vertikalen nach hinten geneigt ist, wobei die Winkeländerung (50) zwischen diesen beiden Positionen mindestens 4°, vorzugsweise etwa 6° beträgt.

7. Verfahren zum Herstellen eines Kraftfahrzeugs nach einem der vorangegangenen Ansprüche, **dadurch gekennzeichnet, dass** die Bodenschiene (22) aus einem Bodenschienenzuschnitt und die Sitzschiene (24) aus einem Sitzschienenzuschnitt gefertigt werden, dass die Zuschnitte jeweils um den Krümmungsradius (42) der Schiene gekrümmt verlaufen, dass die Zuschnitte in mindestens einer jeweiligen Prägeform (68) geprägt werden, die einen gekrümmte Verlauf aufweist, wobei der Verlauf in demselben kreisförmigen Krümmungsradius (42) wie die Schienen gekrümmt ist, und dass durch Prägen in mindestens einem Schritt die fertige Bodenschiene (22) bzw. Sitzschiene (24) erstellt wird.

8. Verfahren zum Herstellen eines Kraftfahrzeugs nach einem der Ansprüche 1 bis 6 , **dadurch gekennzeichnet, dass** die Bodenschiene (22) aus einem Bodenschienenzuschnitt und die Sitzschiene (24) aus einem Sitzschienenzuschnitt gefertigt werden, dass die Zuschnitte aus Stahlblech hergestellt werden und länglich sind, wobei a) die Längskanten (67) des Zuschnitts dann, wenn ein Basisflansch (48) im fertigen Fahrzeug in der x-y-Ebene liegt, geradlinig verlaufen und der Zuschnitt einem Zylindermantel entsprechend gebogen ist und b) die Längskanten (67) des Zuschnitts dann, wenn ein Basisflansch (48) im fertigen Fahrzeug in der x-z-Ebene liegt, gekrümmt verlaufen und der Zuschnitt eben ist, dass der Zuschnitt in mindestens einem Biegeschritt um jeweils um zwei parallele Biegeleisten (96) um Biegelinien (83, 92) gebogen wird, die jeweils im Wesentlichen parallel zu einer Längskante (67) verlaufen, und dass mindestens ein Kalibrierschritt durchgeführt wird, bei dem in Gegenrichtung zur Biegung des mindestens einen Biegeschrittes zurückgebogen wird.

## Claims

1. Motor vehicle comprising a motor vehicle seat fixed on a floor assembly (28) having,
- a seat frame which has a seating area (36), and
- a longitudinal adjustment device which has a rail guide with at least one pair of rails comprising a bottom rail (22) attached to the floor assembly (28), a seat rail (24) and guiding means (26) arranged between these two rails, whereby the rails of the pair of rails are movable relative to each other along a displacement path (20) in a longitudinal direction that is substantially parallel to an x-axis, and the seat rail (24) comprises means (30) for fastening the seat frame to be arranged above the pair of rails, whereby the bottom rail (22) and the seat rail (24) are curved respectively with the same radius of circular curvature (42) and the center of curvature (44) is located on the side of the pair of rails which shows in the direction opposite to the seat frame,
**characterized in that** the radius of curvature (42) is between 1.500 and 3.000 mm, in particular between 1.800 and 2.500 mm, and that a tangent to the frontmost area of the bottom rail (22) extends substantially parallel to the x-y plane and deviates from this plane preferably only ± 5°, in particular only ± 3°.

2. Motor vehicle according to the preceding claim, **characterized in that** the center of curvature (44) is located on a plane that is parallel to the x-z plane and extends through the center of the pair of rails.

3. Motor vehicle according to any one of the preceding claims, **characterized in that**, in a frontmost position, the seating area (36) is inclined backwards by an angle with respect to the horizontal plane x-y, which is between 0 and 6°.

4. Motor vehicle according to any one of the preceding claims, **characterized in that** the means (30) for the fixation of the seat frame comprise front connecting parts (32) and rear connecting parts (34), and that said front connecting parts (32) have a length that is 5 -30% smaller than the length of the rear connecting parts (34), and/or that the front connecting parts (32) of each seat side and the rear connecting parts (34) of each seat side have the same length in the longitudinal direction that substantially corresponds to the z direction.

5. Motor vehicle according to any one of the preceding claims, **characterized in that** the longitudinal adjustment device further comprises a drive mechanism, that the drive mechanism has a) a rotational drive device, in particular an electric motor, which has an output shaft, b) a gear which has a spindle nut which is rotatably connected to the output shaft, and c) a spindle, that said spindle comprises a spindle thread with which said spindle nut is engaged, that the pin is curved in the same radius of circular curvature (42) as the rails, and that the spindle nut is a straight nut.

6. Motor vehicle according to one of the claims 1 to 5, **characterized in that** the motor vehicle seat does not have an adjustment device of the inclination and seat height and no adjustment device of the inclination of a backrest (38), and that, with respect to a vehicle located in a horizontal plane, the backrest (38) is inclined backwards at an angle of between 10 and 15° in the rearmost position of the longitudinal adjustment, measured from the vertical, and is tilted backward at an angle of between 5 and 10° in the most forward position of the seat adjustment, measured from the vertical, the angle change (50) between these two positions being at least 4°, preferably about 6°.

7. Method for manufacturing a motor vehicle according to any one of the preceding claims, **characterized in that** the bottom rail (22) is formed from a blank of the bottom rail and the seat rail (24) is produced from a blank of the seat rail, that the cut blanks extend in a curved manner, respectively, of the radius of curvature (42) of the rail, that the blanks are stamped in at least one stamping die (68) which has a curved course, in which the course is curved with the same circular radius of curvature (42) as the rails, and the finished bottom rail (22) or the seat rail (24) is produced by stamping in at least one step.

8. Method for manufacturing a motor vehicle according to any one of claims 1 to 6, **characterized in that** the bottom rail (22) is formed from a blank of the bottom rail and the seat rail (24) is produced from a blank of the seat rail, that the blanks are made from sheet steel and are elongated, whereby a) the longitudinal edges (67) of the blank extend in a straight line when a base flange (48) in the finished vehicle is located in the x-y plane, and the cut blank is bent along a cylinder, and b) the longitudinal edges (67) of the blank extend in a curved manner when a base flange (48) in the finished vehicle is located in the x-z plane, and the blank is flat, that the cut blank is bent, in at least one bending step, respectively about two parallel bending bars (96), along bending lines (83, 92), each extending essentially parallel to a longitudinal edge (67), and that at least one calibration step is carried out in which a re-bending is carried out in the direction opposite to the bending of said at least one bending step.

## Revendications

1. Véhicule automobile comprenant un siège de véhicule automobile fixé sur un dessous de caisse (28),
- avec un châssis de siège qui présente une zone assise (36), et
- avec un dispositif de réglage longitudinal qui présente un guide à rails avec au moins une paire de rails comprenant un rail de fond (22) fixé au dessous de caisse (28), un rail de siège (24) et des moyens de guidage (26) disposés entre ces deux rails, dans lequel les rails de la paire de rails sont déplaçables l'un par rapport à l'autre le long d'un trajet de déplacement (20) dans une direction longitudinale qui est pour l'essentiel parallèle à un axe x, et le rail de siège (24) comprend des moyens (30) destinés à la fixation du châssis de siège à disposer au-dessus de la paire de rails, dans lequel le rail de fond (22) et le rail de siège (24) sont incurvés respectivement du même rayon de courbure circulaire (42) et le centre de courbure (44) est situé du côté de la paire de rails lequel montre dans la direction opposée au châssis de siège,
**caractérisé par le fait que** le rayon de courbure (42) est compris entre 1.500 et 3.000 mm, en particulier entre 1.800 et 2.500 mm, et qu'une tangente appliquée à la zone la plus avant du rail de fond (22) s'étend pour l'essentiel parallèlement au plan x-y et ne s'écarte de ce plan que de ± 5° de préférence, en particulier que de ± 3°.

2. Véhicule automobile selon la revendication précédente, **caractérisé par le fait que** le centre de courbure (44) est situé sur un plan qui est parallèle au plan x-z et s'étend à travers le centre de la paire de rails.

3. Véhicule automobile selon l'une quelconque des revendications précédentes, **caractérisé par le fait que**, dans une position la plus avant, la zone assise (36) est inclinée vers l'arrière d'un angle par rapport au plan horizontal x-y, qui est compris entre 0 et 6°.

4. Véhicule automobile selon l'une quelconque des revendications précédentes, **caractérisé par le fait que** les moyens (30) de fixation du châssis de siège comprennent des parties avant de liaison (32) et des parties arrière de liaison (34), et que lesdites parties avant de liaison (32) présentent une longueur qui est de 5 à 30 % plus petite que la longueur des parties arrière de liaison (34), et/ou que les parties avant de liaison (32) de chaque côté de siège et les parties arrière de liaison (34) de chaque côté de siège présentent la même longueur dans la direction longitudinale qui correspond pour l'essentiel à la direction z.

5. Véhicule automobile selon l'une quelconque des revendications précédentes, **caractérisé par le fait que** le dispositif de réglage longitudinal comprend en outre un mécanisme de commande, que ledit mécanisme de commande présente a) un dispositif d'entraînement en rotation, en particulier un moteur électrique, qui présente un arbre de sortie, b) un engrenage qui présente un écrou de broche qui est relié en rotation à l'arbre de sortie, ainsi que c) une broche, que ladite broche comprend un filetage de broche avec lequel ledit écrou de broche est en prise, que la broche est incurvée en un même rayon de courbure circulaire (42) que les rails, et que l'écrou de broche est un écrou droit.

6. Véhicule automobile selon l'une quelconque des revendications 1 à 5, **caractérisé par le fait que** le siège de véhicule automobile ne présente pas de réglage de l'inclinaison du siège et pas de réglage de la hauteur de siège et pas de réglage de l'inclinaison d'un dossier (38), et que, par rapport à un véhicule situé dans un plan horizontal, le dossier (38) est incliné vers l'arrière à un angle compris entre 10 et 15° dans la position la plus arrière du réglage longitudinal, mesuré à partir de la verticale, et est incliné vers l'arrière à un angle compris entre 5 et 10° dans la position la plus avant du réglage de siège, mesuré à partir de la verticale, le changement d'angle (50) entre ces deux positions étant de 4° au moins, de préférence de 6° à peu prés.

7. Procédé de fabrication d'un véhicule automobile selon l'une quelconque des revendications précédentes, **caractérisé par le fait que** le rail de fond (22) est réalisé à partir d'une ébauche découpée de rail de fond et le rail de siège (24) est réalisé à partir d'une ébauche découpée de rail de siège, que les ébauches découpées s'étendent de façon incurvée respectivement du rayon de courbure (42) du rail, que les ébauches découpées sont estampées dans au moins une matrice à estamper (68) respective qui présente une allure incurvée, dans lequel l'allure est incurvée du même rayon de courbure circulaire (42) que les rails, et que le rail de fond (22) fini ou bien le rail de siège (24) fini est réalisé par estampage dans au moins une étape.

8. Procédé de fabrication d'un véhicule automobile selon l'une quelconque des revendications 1 à 6, **caractérisé par le fait que** le rail de fond (22) est réalisé à partir d'une ébauche découpée de rail de fond et le rail de siège (24) est réalisé à partir d'une ébauche découpée de rail de siège, que les ébauches découpées sont faites à partir de tôle d'acier et sont allongées, dans lequel a) les arêtes longitudinales (67) de l'ébauche découpée s'étendent de manière rectiligne lorsqu'une flasque de base (48) dans le véhicule fini est située dans le plan x-y, et l'ébauche découpée est cintrée suivant une nappe de cylindre, et b) les arêtes longitudinales (67) de l'ébauche découpée s'étendent de manière incurvée lorsqu'une flasque de base (48) dans le véhicule fini est située dans le plan x-z, et l'ébauche découpée est plane, que l'ébauche découpée est cintrée, en au moins une étape de cintrage, respectivement autour de deux barres de cintrage (96) parallèles, suivant des lignes de cintrage (83, 92) qui s'étendent chacune pour l'essentiel parallèlement à une arête longitudinale (67), et qu'au moins une étape de calibrage est mise en oeuvre dans laquelle on procède à un re-cintrage dans le sens opposé au cintrage de ladite au moins une étape de cintrage.
